(19) Europäisches Patentamt

European Patent Office

Office européen des brevets

(11) EP 0 945 400 B1

(12) **EUROPÄISCHE PATENTSCHRIFT**

(45) Veröffentlichungstag und Bekanntmachung des Hinweises auf die Patenterteilung:
**05.06.2002  Patentblatt 2002/23**

(51) Int Cl.⁷: **C01B 21/00**, C01B 21/28

(21) Anmeldenummer: **99105223.4**

(22) Anmeldetag: **13.03.1999**

(54) **Verfahren und Anlage zur Herstellung von Salpetersäure**

Process and plant for the preparation of nitric acid

Procédé et installation de préparation d'acide nitrique

(84) Benannte Vertragsstaaten:
**CH DE ES FR GB IT LI NL SE**

(30) Priorität: **26.03.1998  DE 19813223**

(43) Veröffentlichungstag der Anmeldung:
**29.09.1999  Patentblatt 1999/39**

(73) Patentinhaber:
• **Krupp Uhde GmbH**
  **44141 Dortmund (DE)**
• **MAN Turbomaschinen AG GHH BORSIG**
  **46145 Oberhausen (DE)**

(72) Erfinder:
• **Maurer, Rainer**
  **58332 Schwelm (DE)**
• **Szonn, Erich**
  **58454 Witten (DE)**
• **Seehars, Wolfgang**
  **46149 Oberhausen (DE)**
• **Mietze, Lothar**
  **46487 Wesel (DE)**

(74) Vertreter: **Patentanwälte**
  **Meinke, Dabringhaus und Partner**
  **Postfach 10 46 45**
  **44046 Dortmund (DE)**

(56) Entgegenhaltungen:
  **EP-A- 0 602 491          EP-B- 0 440 902**
  **DE-A- 4 239 138**

• **HÄNGGELI W. : "EXPANSIONSTURBINEN FÜR DIE HERSTELLUNG VON SALPETERSAÜRE" TECHNISCHE RUNDSCHAU SULZER, Bd. 2, 1986, Seite 29-31 XP002132897**
• **UHDE GMBH: "THE COMPACT PLANT" NITROGEN,1995, Seiten 32--33, XP002132898**

**Beschreibung**

Die vorliegende Erfindung richtet sich auf ein Verfahren zur Herstellung von Salpetersäure mit integrierter Energierückgewinnung.

Insbesondere wird ein Verfahren zur Herstellung von Salpetersäure nach dem Zwei-Druckverfahren angegeben, in der die Verbrennung des eingesetzten Ammoniaks bei einem ersten, niedrigem Druck mittels verdichteter Prozeßluft geschieht und das durch die Verbrennung gebildete Nitrosegas bei einem zweiten, vergleichsweise höheren Druck als dem ersten mindestens teilweise von Wasser absorbiert wird, wodurch die Salpetersäure entsteht, und das nicht absorbierte Restgas zwecks Gewinnung von Verdichterarbeit in einem Restgasexpander vom zweiten Druck auf Umgebungsdruck entspannt wird.

Zur Herstellung der Salpetersäure wird zunächst Ammoniak $NH_3$ mit Luft reaktiv umgesetzt und Stickstoffoxid NO erzeugt:

$$4\ NH_3 + 5\ O_2 \rightarrow 4\ NO + 6\ H_2O + 907{,}3\ kJ.$$

Das dabei anfallende Stickstoffoxid NO wird dann zu Stickstoffdioxid $NO_2$ aufoxidiert:

$$2\ NO + O_2 \rightarrow 2\ NO_2 + 113{,}1\ kJ.$$

Abschließend wird das so gewonnene Stickstoffdioxid $NO_2$ in Wasser absorbiert und es entsteht die Salpetersäure:

$$4\ NO_2 + O_2 + 2\ H_2O \rightarrow 4\ HNO_3 + 256{,}9\ ./.\ 390{,}3\ kJ.$$

Damit möglichst alles vom gewonnenen Stickstoffdioxid $NO_2$ vom Wasser absorbiert wird, geschieht die Absorption bei erhöhtem Druck. Absorbiert wird vorzugsweise bei Drucken zwischen 4 bis 14 bar.

Der für die Umsetzung des als Rohstoff eingesetzten Ammoniaks benötigte Sauerstoff wird als Luftsauerstoff zugeführt. Dazu wird die Prozeßluft verdichtet und auf einen Druck gebracht, der sowohl der Oxidationsreaktion wie auch der Absorptionsreaktion angepaßt ist.

Die Energie zur Kompression der Luft wird einesteils mittels Entspannung des aus der Absorption austretenden Restgases auf Umgebungsdruck und anderenteils durch die Verwertung der bei den Umsetzungen freigesetzten Wärmen gewonnen.

Die in verschiedenen Ausführungen errichteten Salpetersäure-Anlagen sind an die speziellen Anforderungen ihres jeweiligen Standortes angepaßt.

Einsträngige Salpetersäure-Anlagen werden üblicherweise mit Nenn-Kapazitäten zwischen 100 bis 1000 Tonnen Tagesproduktion Salpetersäure errichtet. Bei Verdoppelung des Reaktionsteils können somit einsträngig bis zu 2000 Tonnen Tagesproduktion erreicht werden.

Ist die geforderte Tagesproduktion gering oder besitzt ein Standort vergleichsweise niedrigere Energiepreise, so wird die Salpetersäure-Anlage vorzugsweise nach dem Mono-Hochdruck-Verfahren ausgeführt. Bei diesem Verfahren erfolgt die Verbrennung des Ammoniaks und die Absorption der Stickstoffoxide bei etwa gleichem Druck von ca. 10 bar.

Sind große Nenn-Kapazitäten und/oder höhere Säurekonzentrationen gefordert, bietet eine nach dem Zwei-Druckverfahren ausgeführte Salpetersäure-Anlage die wirtschaftlichere Lösung.

Beim Zwei-Druckverfahren geschieht die Verbrennung des eingesetzten Ammoniaks bei einem ersten, und bei, - verglichen mit dem Absorptionsdruck -, niedrigerem Druck. Die bei der Verbrennung gebildeten nitrosen Gase, -auch Nitrosegas genannt -, werden nach der Kühlung mittels Nitrosegasverdichtung auf den zweiten Druck, den Absorptionsdruck, gebracht.

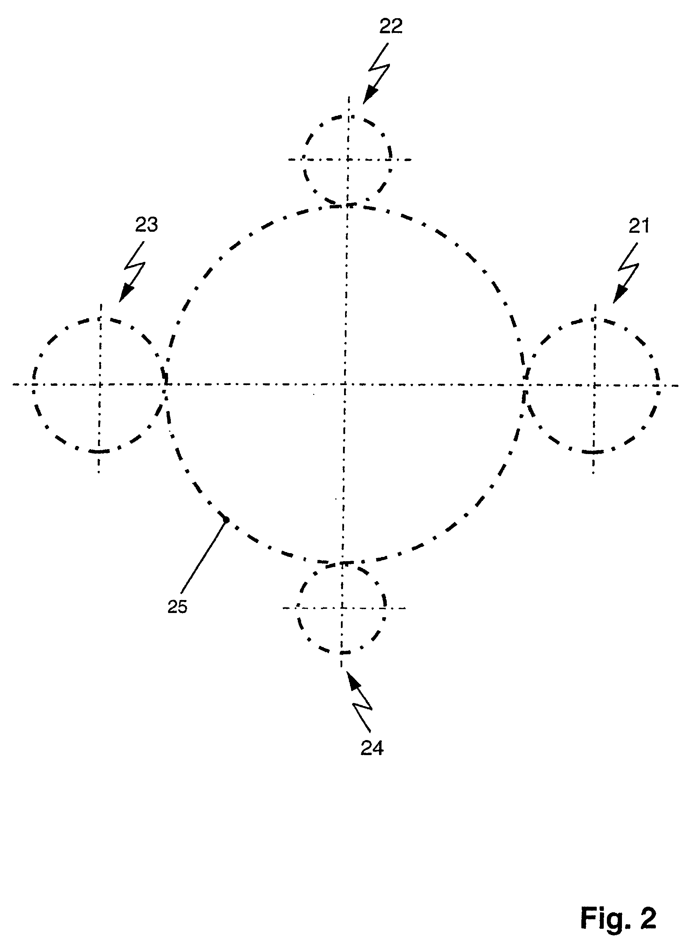

In der Firmendruckschrift "Technische Rundschau Sulzer", Heft 2, 1986, wird auf den Seiten 29 bis 31 der Beitrag von W. Hänggeli mit dem Titel "Expansionsturbinen für die Herstellung von Salpetersäure" veröffentlicht. In diesem Beitrag ist in Abbildung 2 das Verfahrens-Fließbild einer Salpetersäure-Produktionsanlage dargestellt. Gezeigt wird eine Salpetersäure-Anlage, die nach dem Zwei-Druckverfahren arbeitet.

Der Luftkompressor und der Nitrosegasverdichter dieser Salpetersäure-Anlage bilden eine Maschinengruppe, indem sie von einer gemeinsamen Welle aus angetrieben werden. Angetrieben wird diese Gruppe durch eine Dampfturbine einerseits und einen Restgasexpander andererseits. Diese vier miteinander zu einem Wellenstrang gekuppelten Turbo-Maschinen sind in Axial-Bauform ausgeführt. Die Förder- bzw. Antriebsfluide durchsetzen das jeweilige Maschinengehäuse im wesentlichen in achsparalleler Richtung. In ihrer Wellenerstreckung gesehen, bauen diese Maschinen lang. Dies zeigen die Bilder 1 und 7 des Beitrages. Der Platzbedarf eines solchen langgestreckten, gekuppelten Turbomaschinensatzes ist nachteilig, denn er steht oft der gewünschten kompakten Bauweise einer Salpetersäure-Anlage im Wege. Auch verursachen der Transport und/oder die Ausrichtung der langen Maschinen manchmal Probleme.

Seit rund vier Jahrzehnten ist eine Rotations-Verdichterbauart bekannt, die in Wellenerstreckung gesehen wesentlich kürzer baut als die Axialbauform. Bei diesen sogenannten Getriebe-Turbokompressoren ist in einem zentralen Getriebegehäuse ein Getriebegroßrad angeordnet, das vom Antrieb, z.B. einem Elektromotor, mit der Antriebsdrehzahl bewegt wird. Die Verzahnung des Getriebegroßrads steht im Eingriff mit der Verzahnung mindestens einer Ritzelwelle, so daß die Antriebsdrehzahl zu einer ins Schnelle übersetzten Ritzelwellendrehzahl gewandelt wird.

Um das zentrale Getriebegroßrad herum können bis zu vier schnell-laufende Ritzelwellen mit unterschiedlichen Übersetzungen im Getriebegehäuse angeordnet werden.

Auf den Enden der Ritzelwellen sind die radial/zentrifugal fördernden Turbokompressor-Laufräder montiert. Da die Laufräder fliegend angeordnet sind, bildet das Getriebegehäuse auch den Verdichterträger. Die Kompressorspiralgehäuse sind an das Getriebegehäuse angeflanscht.

An einer Mehrwellenmaschine mit einem Großrad lassen sich bis zu vier Ritzelwellen anordnen, davon zwei in der horizontalen Ebene und je eine über und unter dem Großrad. Damit ist theoretisch die Unterbringung von acht fliegend angeordneten Laufrädern möglich.

Mehrwellen-Getriebe-Turbokompressoren lassen sich eng an die geforderten Betriebsdaten anpassen. Das zu verdichtende Medium wird dabei stufenweise auf seinen Enddruck gebracht. Jede Verdichtungsstufe wird durch ein eigenes Laufrad gebildet. Die Laufräder werden entsprechend den betrieblichen Anforderungen in verschiedenen Größen und mit unterschiedlicher Beschaufelung eingesetzt. Die halboffen ausgeführten Laufräder besitzen eine hohe Schluckfähigkeit, sie sind räumlich verwunden und rückwärts gekrümmt beschaufelt. Spitzenwirkungsgrade erzielen Laufräder in geschlossener Ausführung.

Mehrwellen-Getriebe-Turbokompressoren sind inzwischen in unterschiedlichen Ausführungen bekannt geworden.

In der europäischen Patentschrift EP-0 440 902-B1 ist ein Getriebe-Turbokompressor beschrieben, in dem dem zentralen Getriebegroßrad ein zusätzliches Zwischenzahnrad nachgeschaltet ist. Vom Getriebegroßrad werden vier Laufräder mittels zweier Ritzelwellen angetrieben. Vom Zwischenzahnrad werden weitere Ritzelwellen angetrieben. Mit einem solchen Getriebe-Turbokompressor lassen sich Druckverhältnisse von über 80 erzielen. In einer Anlage zur Herstellung von Salpetersäure kommen solch hohe Druckverhältnisse allerdings nicht vor.

In der deutschen Gebrauchsmuster-Eintragung G 92 01 858 ist ebenfalls ein Getriebe-Turbokompressor für höhere Druckverhältnisse beschrieben, die größer 60 bis zu 80 und mehr betragen können. Dieser Getriebe-Turbokompressor ist ebenfalls für den Einsatz in Salpetersäure-Anlagen wenig geeignet, weil in diesen Anlagen derart hohe Druckverhältnisse nicht auftreten.

Die deutsche Offenlegungsschrift DE 42 39 138 behandelt eine Verdichteranlage, bei der für die niederen Druckstufen Mehrwellen-Getriebe-Turbokompressoren verwendet werden, während die Verdichter-Hochdruckstufen durch eine gesonderte Turbine angetrieben werden, die ihrerseits durch Abzweigung von Prozeßmedium aus einer der Niederdruckstufen gespeist wird.

Eine derartige Verdichteranlage ist gleichfalls für die Verwendung in einer Salpetersäure-Anlage wenig geeignet, weil in Salpetersäure-Anlagen diese hohen Druckverhältnisse nicht benötigt werden.

Die Verdichteranlage nach DE 42 39 138 kann beispielsweise von einem Elektromotor, aber auch von einer Gasturbine oder einer Dampfturbine angetrieben sein. Bei Turbinenantrieb ist es möglich, das zentrale Großrad, wenn es gegenüber der Turbinendrehzahl langsamer läuft, über ein zusätzliches untersetzendes Ritzel anzutreiben, das mit der Turbinenwelle gekuppelt ist.

Da in den mit dem Zwei-Druckverfahren betriebenen Salpetersäure-Anlagen sowohl der Dampfturbinen- als auch der Gasturbinen-Antrieb parallel und zusammengeschaltet genutzt wird, ist das in DE 42 39 138 vorgesehene Ein-Antriebskonzept für diese Anlagen ungeeignet.

Noch ein Mehrwellen-Getriebe-Turbokompressor zur Förderung bei hohen Druckverhältnissen in der Größenordnung von 60 und mehr ist in der europäischen Patentschrift EP 0 602 491 dargestellt. Bei diesem besitzt die das Laufrad tragende Ritzelwelle die vom Sonnenrad eines Planetengetriebes erzeugte hohe Drehzahl.

Auch dieser Getriebe-Turbokompressor ist so nicht in Salpetersäure-Anlagen verwendbar.

Weil Getriebe-Turbokompressoren mit gutem Wirkungsgrad arbeiten, sind sie bei energiekosten-sensitiven Anlagen, wie z.B. in Bergwerken oder bei der Luftzerlegung, gut eingeführt.

In einer weiteren Veröffentlichung wird über die Arbeitsluftversorgung eines Kalksteintagebaus mittels vierstufigen Mehrwellen-Getriebe-Turbokompressoren berichtet [1].

Auch werden Mehrwellen-Getriebe-Turbokompressoren beim Betrieb einer Fernrohrleitung für den Transport von gasförmigem Stickstoff genutzt. Der 8-stufige Getriebe-Turbokompressor liefert 55000 Nm$^3$/h Stickstoff bei einem Enddruck von 80 bar [2].

In einem anderen Zeitschriftenbeitrag [3] wird ein Hinweis auf die Anwendung eines Mehrwellen-Getriebe-Turbokompressors in einer Salpetersäure-Anlage gegeben. In dieser Anlage wird die Salpetersäure nach dem Ein-Druckverfahren, d.h. nach dem Mono-Hochdruckverfahren, hergestellt. Der dabei genutzte dreistufige Getriebe-Turbokompressor dient ausschließlich für die Verdichtung der Verbrennungsluft. Als sein Antrieb ist ein Restgasexpander kombiniert mit Dampfturbine bzw. Elektromotor vorgesehen.

Der dreistufige Getriebe-Turbokompressor besitzt zwei Ritzelwellen mit je zwei Enden. Auf drei Enden der Ritzelwellen ist je ein Turbokompressor-Laufrad montiert, wodurch sich die Dreistufigkeit der Luftverdichtung ergibt, um die Verbrennungsluft von atmosphärischem Druck auf den Druck der Verbrennung des Ammoniaks von rund 10 bar zu bringen. Der Restgasexpander ist zweistufig und in axialer Bauform ausgeführt. Seine Abtriebswelle ist direkt mit dem vierten, laufradfreien Ende der Ritzelwellen des Getriebe-Turbokompressors gekuppelt. Eine Ritzelwellendrehzahl und die Drehzahl des Restgasexpanders sind damit identisch.

Bei diesem in [3] beschriebenen Mehrwellen-Getriebe-Turboverdichter ist es von Nachteil, daß er lediglich mit zwei Ritzelwellen ausgeführt ist und deswegen nicht für das Zwei-Druckverfahren zur Erzeugung von Salpetersäure eingesetzt werden kann. Das in [3] angegebene Verfahren kann also lediglich für vergleichsweise niedrige Tagesproduktionskapazitäten eingesetzt werden, was auch noch einen weiteren Nachteil darstellt.

Die Firmen-Gruppe namens "Atlas-Copco" gibt eine regelmäßig. erscheinende Publikation unter dem Titel "Applied Compressor & Expander Technique" heraus. Im Jahrgang 1994, Vol. 3, Issue 2, berichten auf Seiten 18 bis 21 die Herren Dr. Reza Agabi und Dr. Bebrooz Ershaghi in ihrem Beitrag "Expander Improvements in Ethylene Plants" über den Einsatz von Radial-Expandern in Anlagen zur Herstellung von Ethylen. Ein Hinweis, daß Radial-Expander mit einwärts auf die Rotorachse hin gerichteter Strömungsführung im Expanderlaufrad außer in Ethylen-Anlagen auch in Anlagen zur Herstellung von Salpeter-Säure einzusetzen wären, wird nicht gegeben.

Es ist Aufgabe der vorliegenden Erfindung, ein Verfahren bzw. eine Anlage zur Salpetersäureherstellung bereitzustellen, welche bei Vermeidung bzw. Verminderung der vorgenannten Nachteile eine Optimierung der Salpetersäure-Herstellung erreicht bei Verbesserung der Produktionsparameter und der Stoff- und Energiebilanzen.

Mit einem Verfahren der eingangs bezeichneten Art wird diese Aufgabe gemäß der Erfindung dadurch gelöst, daß ein Mehrwellen-Getriebe-Turboverdichter getrennt von Prozeßluft und von Nitrosegas beaufschlagt wird, wobei die Prozeßluft auf den genannten ersten Druck verdichtet und das Nitrosegas auf den genannten zweiten Druck verdichtet wird.

Mit der Erfindung wird erreicht, über einen einzigen Mehrwellen-Getriebe-Turboverdichter die zur Herstellung der Salpetersäure vorgesehenen Stoffströme zu verarbeiten und die geforderten Drücke in nur einer Maschine zu erreichen.

Ausgestaltungen der erfindungsgemäßen Verfahrensweise ergeben sich durch die Unteransprüche ebenso wie aus den Anlageansprüchen.

Eine zweckmäßige Verfahrensweise kann darin bestehen, die vom Restgasexpander erzeugte Verdichtungsarbeit mindestens teilweise zum Antrieb von Nitrosegas-Verdichterstufen und/oder von Luft-Verdichterstufen des Mehrwellen-Getriebe-Turboverdichters zu verwenden.

Eine weitere Ausgestaltung der Erfindung besteht darin, daß die von einem oder mehreren abtriebsseitigen Wellenenden eines Restgasexpanders erzeugte Verdichterarbeit unmittelbar und drehzahlidentisch an mindestens eine Ritzelwelle des einen einzigen Mehrwellen-Getriebe-Turboverdichters übertragen wird.

Grundsätzlich sind verschiedene Antriebsarten des Mehrwellen-Getriebe-Turboverdichters denkbar. Hier kann beispielsweise in Ausgestaltung nach der Erfindung ein Elektromotor, ein Dieselmotor oder eine Gas- oder eine Dampfturbine für den Antrieb des Großrades vorgesehen sein, wobei eine weitere Ausgestaltung darin bestehen kann, daß eine Ritzelwelle des Mehrwellen-Getriebe-Turboverdichters von einer Gasoder Dampfturbine unmittelbar und drehzahlidentisch angetrieben wird. Über diesen Antrieb werden dann die weiteren Aggregate mit angetrieben.

Eine weitere Ausgestaltung der Erfindung besteht darin, daß aus der Niederdruckstufe des Luftverdichters am Mehrwellen-Getriebe-Turboverdichter die verdichtete Luft unmittelbar in die Hochdruckstufe übergeleitet wird, wobei in weiterer Ausgestaltung auch vorgesehen sein kann, daß aus der Niederdruckstufe des Nitrosegasverdichters des Mehrwellen-Getriebe-Turboverdichters die verdichteten Nitrosegase ungekühlt in die Hochdruckstufe übergeleitet werden.

Zur Lösung der oben formulierten Aufgabe sieht die Erfindung, ausgehend von einer Anlage zur Herstellung von Salpetersäure nach dem Zwei-Druckverfahren mit einem $NH_3$-Brenner zur Verbrennung des eingesetzten Ammoniaks bei einem ersten, niedrigen Druck sowie einem Verdichter zur Zuführung der Prozeßluft, einem Adsorptionsturm zur teilweisen Adsorbierung des Nitrosegases mittels Wasser und Abführung der Salpetersäure mit einem Restgasexpander zur Gewinnung von Verdichterarbeit und Entspannung von dem zweiten Druckniveau auf Umgebungsdruck, vor, die sich dadurch auszeichnet, daß in der Anlage ein Mehrwellen-Getriebe-Turboverdichter vorgesehen ist mit einem Verdichter zur Verdichtung der Prozeßluft auf den ersten Druck und mit einem Nitrosegasverdichter zur Verdichtung des Nitrosegases auf einen zweiten Druck.

Eine solche Anlage weist die weiter oben schon zur Verfahrenweise angegebenen Vorteile auf. Darüber hinaus läßt sie sich besonders kompakt bauen, da nur ein einziger Mehrwellen-Getriebe-Turboverdichter eingesetzt werden muß, um Kompressionen und Dekompressionen zu ermöglichen.

Ausgestaltungen der Anlage ergeben sich aus den weiteren Anlageansprüchen, wobei vorgesehen sein kann, daß der eine einzige Mehrwellen-Getriebe-Turboverdichter mit vier Ritzelwellen ausgestattet ist, die erste und die dritte Ritzelwelle in der horizontalen Mittelebene, die durch die Achse des Großrades festgelegt ist, angeordnet sind, die zweite Ritzelwelle zentrisch über dem Großrad und die vierte Ritzelwelle zentrisch unter dem Großrad angeordnet ist.

Darüber hinaus können mindestens drei Ritzelwellen zwei Enden mit Laufrädern von Verdichtern bzw. Expandern aufweisen.

Eine Ausgestaltung der Anlage besteht beispielsweise darin, daß die erste Ritzelwelle an ihrem einen Ende mit dem Laufrad der Niederdruckstufe eines Luftverdichters und an ihrem anderen Ende mit dem Laufrad der Niederdruckstufe eines Restgasradialexpanders bestückt ist, die zweite Ritzelwelle an ihrem einen Ende mit dem Laufrad der Niederdruckstufe eines Nitrosegasverdichters und an ihrem anderen Ende mit dem Laufrad der Hochdruckstufe des besagten Nitrosegasverdichters bestückt ist, die dritte Ritzelwelle an ihrem einen Ende mit dem Laufrad einer Hochdruckstufe des besagten Restgasradialexpanders und an ihrem anderen Ende mit dem Laufrad der Hochdruckstufe des besagten Luftverdichters bestückt ist und die vierte Ritzelwelle an ihrem einen Ende vom abtriebsseitigen Wellenende einer Prozeßwärme umsetzenden Dampfturbine unmittelbar und drehzahlidentisch angetrieben wird und an ihrem anderen Ende unbestückt ist.

Weitere Merkmale, Einzelheiten und Vorteile der Erfindung ergeben sich aufgrund der nachfolgenden Beschreibung sowie anhand der Zeichnung. Diese zeigt in

Fig. 1    ein Anlagenschaltbild mit einem vereinfacht wiedergebenen erfindungsgemäßen Mehrwellen-Getriebe-Turboverdichter und in

Fig. 2    eine schematische Darstellung der Anordnung der Ritzelwellen in bezug auf das Großrad des Mehrwellen-Getriebe-Turboverdichters.

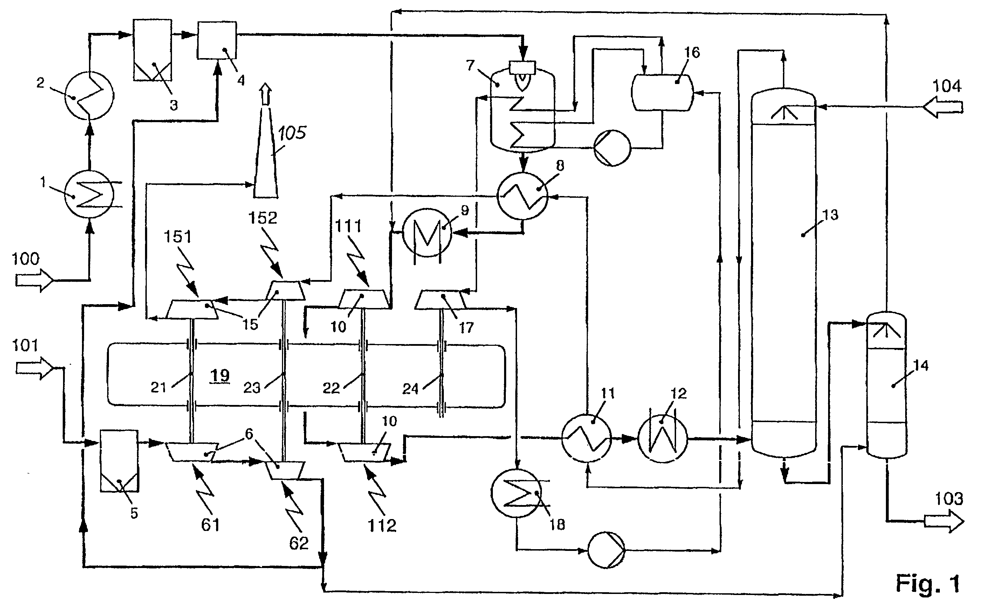

In Fig. 1 sind die zu- und abströmenden Massenströme mit dreistelligen Bezugszeichen versehen. So bezeichnet das Bezugszeichen 100 den Eintritt von flüssigem $NH_3$, 101 den Eintritt der Prozeßluft, 104 den Eintritt des Prozeßwassers in das System und 103 den Austritt der Salpetersäure aus der Anlage, wobei die Abluft symbolisch als Kamin dargestellt ist und das Bezugszeichen 105 trägt.

Das bei 100 eintretende $NH_3$-flüssig beaufschlagt einen $NH_3$-Verdampfer 1, einen $NH_3$-Gas-Vorwärmer 2, dann einen $NH_3$-Filter 3 und wird dann einem $NH_3$-Luftmischer 4 zugeführt.

Bei Eintritt in den Luftmischer 4 hat die Prozeßluft 101 zunächst einen Luftfilter 5 durchströmt, dann einen allgemein mit 6 bezeichneten Luftverdichter und tritt somit mit erhöhtem Druck in den $NH_3$-Luftmischer 4 ein. Das $NH_3$-Luft/Luftgemisch wird einem $NH_3$-Brenner mit LaMont-Abhitzekessel 7 zugeführt und über einen Restgaserhitzer 8 geleitet, um dann über einen ersten Nitrosegaskühler 9 dem zweistufigen Nitrogaskompressor, allgemein mit 10 bezeichnet, zugeführt zu werden. Im Strömungsweg des Nitrosegases folgt dann ein Restgaserhitzer, ein Nitrosegaskühler 12, wobei dann das Nitrosegas unten in den Adsorptionsturm 13 eintritt, der von oben mit Prozeßwasser 104 beaufschlagt ist. Geleitet über den $HNO_3$-Entgaser 14 verläßt dann bei 103 die Salpetersäure den Prozeß.

Aus dem Dom des Absorptionsturmes wird das Restgas über den Restgaserhitzer 11 dann über den Restgaserhitzer 8 dem Restgasradialexpander, allgemein mit 15 bezeichnet, zugeführt, um nach Entspannung über den Schornstein 105 an die Umgebung abgegeben zu werden.

Wesentlich für die vorliegende Erfindung ist der allgemein mit 19 bezeichnete Mehrwellen-Getriebe-Turboverdichter, der in Fig. 1 schematisch vereinfacht dargestellt ist, wobei dort das in Fig. 2 mit 25 bezeichnete Großrad aus Darstellungsgründen nicht wiedergegeben ist, in Fig. 1 sind die mit 21 bis 24 bezeichneten Ritzelwellen dargestellt.

Die Ritzelwelle 22 trägt auf beiden Seiten je eine Stufe des Nitrosegasverdichters 10, wobei die Niederdruckstufe mit 111 und die Hochdruckstufe des Nitrosegasverdichters bzw. -kompressors mit 112 bezeichnet ist.

Die Ritzelwellen 21 und 23 tragen auf einer Seite zwei Stufen des Restgasradialexpanders 15. Dort wird zunächst die Hochdruckstufe 152 und dann die Niederdruckstufe 151 vom Restgas beaufschlagt, während die jeweils korrespondierenden anderen Wellenenden die zwei Stufen des Luftverdichters 6 tragen. Die Ritzelwelle 21 trägt die Niederdruckstufe 61, während die Ritzelwelle 23 die Hochdruckstufe 62 des Luftverdichters aufweist.

Zusätzlich zu den Ritzelwellen 21, 22 und 23 steht das Großrad 25 des Mehrwellen-Getriebe-Turboverdichters 19 noch mit einem Ritzel der Welle 24 im Eingriff. Die Welle 24 trägt eine Kondensationsdampfturbine 17, die vom Dampf aus der Dampftrommel 16 beaufschlagt wird, der über den Kondensator 18 dieser Dampftrommel 16 zugeführt wird.

In der räumlichen Zuordnung liegt die Ritzelwelle 22 des Nitrosegaskompressors oben auf dem Großrad 25, die vierte Ritzelwelle 24 der Kondensationsdampfturbine 17 unterhalb des Großrades, während die Ritzel der Ritzelwelle 21 und 23 links und rechts neben dem Großrad 25 in einer gemeinsamen horizontalen Mittelebene angeordnet sind, wie sich dies aus Fig. 2 ergibt.

Als Beispiel für einen möglichen einzusetzenden Maschinensatz seien folgende Angaben gemacht, wobei eine Salpetersäure-Anlage nach dem hier beschriebenen Zwei-Druckverfahren zugrundegelegt wird mit 900 Tagestonnen Salpetersäure bezogen auf eine 100 %-ige Konzentration. Die Beispiele beziehen sich auf einen Mehrwellen-Getriebe-Turboverdichter der beschriebenen Art:

Technische Daten:

**Kompressor/Compressor:**

| Fluid: | | Luft/air | NO-Gas |
|---|---|---|---|
| - STP-Bedingungen, naß (STP conditions, wet) 0°C, 1.013 bar) Volumenstrom/Volume flow | m³/h | 145.880 | 132.140 |
| - Saug-Bedingungen (Suction conditions) | m³/h | 164.591 | 37.653 |
| Einlaßbedingungen/Inlet conditions: | | | |
| - Saug-Druck, abs. (Suction pressures, abs) | bar | 0,98 | 4,2 |
| - Saug-Temperatur (Suction temperature) | °C | 2,5 | 50 |
| - Relative Feuchte (Relative humidity) | pct | 60 | |
| Auslaßbedingungen/Outlet conditions: | | | |
| - Entladungsdruck, abs. (Discharge pressure, abs) | bar | 4,6 | 12,0 |
| - Entladungstemperatur, ca. (Discharge temperature, approx.) | °C | 220 | 177 |
| Kompressor Drehzahl, ca. (Compressor speed, approx.) | rpm | 7.250/10.374 | 13.668 |
| Benötigte Kupplungsleistung (Power required at coupling) | kW | 10.792 | 6.492 |

**Expander:**

| Fluid: | | |
|---|---|---|
| STP Volumenstrom (STP volume flow) | m³/h | 116.550 |
| Einlaßdruck, abs. (Inlet pressure, abs) | bar | 10,9 |
| Einlaßtemperatur (Outlet pressure, abs) | °C | 420 |
| Auslaßdruck, abs (Outlet pressure, abs) | bar | 1,09 |
| Auslaßtemperatur abs. (Outlet temperature, approx.) | °C | 150 |
| Leistungsabgabe (Power output at coupling) | kW | 11.608 |
| Drehzahl (Speed) | rpm | 10.374/7.250 |

**Dampfturbine/Steam turbine:**

| Frischdampf-Druck (Live-steam pressure) | abs.bar | 60 |
|---|---|---|
| Frischdampf-Temperatur (Live-steam temperature) | °C | 450 |

**Kondensator/Condenser:**

| Druck, abs (Pressure, abs) | bar | 0,1 |
|---|---|---|
| Leistungsabgabe (Power output at coupling) | kW | 5.676 |
| Dampfdurchsatz (Steam flow) | kg/h | 21.350 |
| Drehzahl (Speed) | rpm | 8.700 |

**Verzeichnis der Veröffentlichungen**

[1] J. Pruemper, Moderne vielstufige Getriebekompressoren und ihr Einsatz in der Industrie Konferenz-Einzelbericht: 6. Symposium Pumpen und Verdichter, TU Magdeburg, DDR, 11.-12.4.1989, Band 1 (1989) Apr, Seite 187-201 (15 Seiten, 19 Bilder).

[2] H.-J. Pruemper, Getriebeverdichter für die Prozeßgasindustrie Zeitschriftenaufsatz: Energieanwendung, Band 42 (1993) Heft 4, Seite 198-200 (3 Seiten, 3 Bilder).

[3] Uhde GmbH, The Compact Plant, NITROGEN, May-June 1995, p. 32/33.

**Bezugszeichen-Legende**

1 $NH_3$-Verdampfer
2 $NH_3$-Gas-Vorwärmer
3 $NH_3$-Gasfilter
4 $NH_3$-Luftmischer
5 Luftfilter
6 Luftverdichter
7 $NH_3$-Brenner mit *La Mont*-Abhitzekessel
8 Restgas-Erhitzer II
9 Nitrose-Gaskühler I
10 Nitrose-Gaskompressor
11 Restgas-Erhitzer I
12 Nitrose-Gaskühler II
13 Absorptionsturm
14 $HNO_3$-Entgaser
15 Restgas-Radial-Expander
16 Dampftrommel
17 Kondensationsdampfturbine
18 Kondensator
19 Mehrwellen-Getriebe-Turboverdichter
21 erste Ritzelwelle
22 zweite Ritzelwelle
23 dritte Ritzelwelle
24 vierte Ritzelwelle
61 Niederdruckstufe des Luftverdichter
62 Hochdruckstufe des Luftverdichter
100 $NH_3$-flüssig
101 Prozeßluft
103 Salpetersäure
104 Prozeßwasser
105 Restgas-Schornstein
111 Niederdruckstufe des Nitrose-Gaskompressors

112     Hochdruckstufe des Nitrose-Gaskompressors
151     Niederdruckstufe des Restgas-Radial-Expanders
152     Hochdruckstufe des Restgas-Radial-Expanders


**Patentansprüche**

1.  Verfahren zur Herstellung von Salpetersäure nach dem Zweidruck-Verfahren, in der die Verbrennung des eingesetzten Ammoniaks bei einem ersten, niedrigem Druck mittels verdichteter Prozeßluft geschieht und das durch die Verbrennung gebildete Nitrosegas bei einem zweiten, vergleichsweise höheren Druck als dem ersten mindestens teilweise von Wasser absorbiert wird, wodurch die Salpetersäure entsteht, und das nicht absorbierte Restgas zwecks Gewinnung von Verdichterarbeit in einem Restgasexpander vom zweiten Druck auf Umgebungsdruck entspannt wird,
    **dadurch gekennzeichnet,**
    **daß** ein Mehrwellen-Getriebe-Turboverdichter getrennt von Prozeßluft und von Nitrosegas beaufschlagt wird, wobei die Prozeßluft auf den genannten ersten Druck verdichtet und das Nitrosegas auf den genannten zweiten Druck verdichtet wird.

2.  Verfahren nach Anspruch 1,
    **dadurch gekennzeichnet,**
    **daß** die vom Restgasexpander erzeugte Verdichterarbeit mindestens teilweise zum Antrieb von Nitrosegas-Verdichterstufen und/oder von Luft-Verdichterstufen des Mehrwellen-Getriebe-Turboverdichters verwendet wird.

3.  Verfahren nach Anspruch 1 oder 2,
    **dadurch gekennzeichnet,**
    **daß** die von einem oder mehreren abtriebsseitigen Wellenenden eines Restgasexpanders erzeugte Verdichterarbeit unmittelbar und drehzahlidentisch an mindestens eine Ritzelwelle des einen einzigen Mehrwellen-Getriebe-Turboverdichters übertragen wird.

4.  Verfahren nach einem der vorangehenden Ansprüche,
    **dadurch gekennzeichnet,**
    **daß** das Großrad des einen einzigen Mehrwellen-Getriebe-Turboverdichters entweder von einem Elektromotor, einem Dieselmotor, oder einer Gas- oder einer Dampfturbine angetrieben wird.

5.  Verfahren nach einem der vorangehenden Ansprüche,
    **dadurch gekennzeichnet,**
    **daß** eine Ritzelwelle des einen einzigen Mehrwellen-Getriebe-Turboverdichters von einer Gas- oder einer Dampfturbine unmittelbar und drehzahlidentisch angetrieben wird.

6.  Verfahren nach einem der vorangehenden Ansprüche,
    **dadurch gekennzeichnet,**
    **daß** aus der Niederdruckstufe des Luftverdichters des Mehrwellen-Getriebe-Turboverdichters die verdichtete Luft ungekühlt in die Hochdruckstufe übergeleitet wird.

7.  Verfahren nach einem der vorangehenden Ansprüche,
    **dadurch gekennzeichnet,**
    **daß** aus der Niederdruckstufe des Nitrosegasverdichters des Mehrwellen-Getriebe-Turboverdichters die verdichteten Nitrosegase ungekühlt in die Hochdruckstufe übergeleitet werden.

8.  Anlage zur Herstellung von Salpetersäure nach dem Zwei-Druckverfahren mit einem $NH_3$-Brenner (7) zur Ver-brennung des eingesetzten Ammoniaks bei einem ersten, niedrigen Druck sowie einem Verdichter zur Zuführung der Prozeßluft, einem Adsorptionsturm (13) zur teilweisen Adsorbierung des Nitrosegases mittels Wasser und Abführung der Salpetersäure, mit einem Restgasexpander zur Gewinnung von Verdichterarbeit und zur Entspannung des Restgases von dem zweiten Druckniveau auf Umgebungsdruck,
    **dadurch gekennzeichnet,**
    **daß** in der Anlage ein Mehrwellen-Getriebe-Turboverdichter (19) vorgesehen ist mit einem Verdichter zur Verdichtung der Prozeßluft auf den ersten Druck und mit einem Nitrosegasverdichter zur Verdichtung des Nitrosegases auf einen zweiten Druck.

9. Anlage nach Anspruch 8,
**dadurch gekennzeichnet,**
**daß** der eine einzige Mehrwellen-Getriebe-Turboverdichter (19) mit vier Ritzelwellen (21-24) ausgestattet ist, die erste (21) und die dritte Ritzelwelle (23) in der horizontalen Mittelebene, die durch die Achse des Großrades (25) festgelegt ist, angeordnet sind, die zweite Ritzelwelle (22) zentrisch über dem Großrad (25) und die vierte Ritzelwelle (25) zentrisch unter dem Großrad angeordnet ist (Fig. 2).

10. Anlage nach Anspruch 8 oder 9,
**dadurch gekennzeichnet,**
**daß** mindestens drei Ritzelwellen zwei Enden mit Laufrädern von Verdichtern bzw. Expandern aufweisen.

11. Anlage nach Anspruch 8, 9 oder 10,
**dadurch gekennzeichnet,**

- **daß** die erste Ritzelwelle (21) an ihrem einen Ende mit dem Laufrad der Niederdruckstufe (61) eines Luftverdichters (6)

- und an ihrem anderen Ende mit dem Laufrad der Niederdruckstufe (151) eines Restgasradialexpanders (15) bestückt ist;

- die zweite Ritzelwelle (22) an ihrem einen Ende mit dem Laufrad (111) der Niederdruckstufe eines Nitrosegasverdichters (10)

- und an ihrem anderen Ende mit dem Laufrad der Hochdruckstufe (112) des besagten Nitrosegasverdichters (10) bestückt ist;

- die dritte Ritzelwelle (23) an ihrem einen Ende mit dem Laufrad einer Hochdruckstufe (152) des besagten Restgasradialexpanders (15) und an ihrem anderen Ende mit dem Laufrad (2) der Hochdruckstufe des besagten Luftverdichters (6) bestückt ist;

- und die vierte Ritzelwelle (24) an ihrem einen Ende vom abtriebsseitigen Wellenende einer Prozeßwärme umsetzenden Dampfturbine (17) unmittelbar und drehzahlidentisch angetrieben wird und an ihrem anderen Ende unbestückt ist.

**Claims**

1. Method for the production of nitric acid in accordance with the dual or mixed pressure method, in which the combustion of the ammonia used takes place at a first, low pressure by means of compressed process air, and at a second pressure, which is higher compared to the first, the nitrous gas formed through the combustion is absorbed - at least partially - by water, through which the nitric acid arises, and that for the purpose of winning compressor work, the unabsorbed residual gas is relaxed in a residual gas expander from the second pressure to ambient pressure,
**characterised in that**
a multi-shaft geared centrifugal compressor is separately impinged on by process air and nitrous gas, wherein the process air is compressed to the aforementioned first pressure and the nitrous gas is compressed to the aforementioned second pressure.

2. Method in accordance with claim 1,
**characterised in that**
the compressor work created by the residual gas expander is at least partially used to drive nitrous gas compressor stages and/or air compressor stages of the multi-shaft geared centrifugal compressor.

3. Method in accordance with claim 1 or 2,
**characterised in that**
the compression work created by one or more driven (take-off) side shaft ends of a residual gas expander is transmitted directly and at identical rotational speed on at least one pinion shaft of the single multi-shaft geared centrifugal compressor.

**4.** Method in accordance with one of the preceding claims, **characterised in that** the large wheel of the single multi-shaft geared centrifugal compressor is driven either by an electric motor, a diesel motor or a gas turbine or steam turbine.

**5.** Method in accordance with one of the preceding claims, **characterised in that** one pinion shaft of the single multi-shaft geared centrifugal compressor is driven directly and at identical rotational speed by a gas turbine or steam turbine.

**6.** Method in accordance with one of the preceding claims, **characterised in that** from the low pressure stage of the air compressor of the multi-shaft geared centrifugal compressor, the compressed air is passed uncooled into the high pressure stage.

**7.** Method in accordance with one of the preceding claims, **characterised in that** from the low pressure stage of the nitrous gas compressor of the multi-shaft geared centrifugal compressor, the compressed nitrous gases are passed uncooled into the high pressure stage.

**8.** Plant for the production of nitric acid in accordance with the dual or mixed pressure method with an $NH_3$ burner (7) for the combustion of the ammonia used at the first, low pressure, as well as a compressor for the supply of the process air, an adsorption tower (13) for partial adsorption of the nitrous gas by means of water and removal of the nitric acid, with a residual gas expander for winning compressor work and for relaxation of the residual gas from the second pressure level to the ambient pressure, **characterised in that** provided in the plant is a multi-shaft geared centrifugal compressor (19), with a compressor for compressing the process air to the first pressure and with a nitrous gas compressor for compressing the nitrous gas to a second pressure.

**9.** Plant in accordance with claim 8, **characterised in that** the single multi-shaft geared centrifugal compressor (19) is equipped with four pinion shafts (21-24), the first (21) and third (23) pinion shafts being arranged in the horizontal central plane which is set through the axis of the large wheel (25), the second pinion shaft (22) being arranged centrically above the large wheel (25), and the fourth pinion shaft (25) [*sic - should be 24*] being arranged centrically below the large wheel (25).

**10.** Plant in accordance with claim 8 or 9, **characterised in that** at least three pinion shafts have two ends with bladed wheels of compressors or expanders.

**11.** Plant in accordance with claim 8, 9 or 10, **characterised in that**

- the first pinion shaft (21) is equipped on one end with the bladed wheel of the low pressure stage (61) of an air compressor (6)

- and at its other end with the bladed wheel of the low pressure stage (151) of a residual gas radial expander (15);

- the second pinion shaft (22) is equipped on one end with the bladed wheel (111) of the low pressure stage of a nitrous gas compressor (10)

- and at its other end with the bladed wheel of the high pressure stage (112) of the aforementioned nitrous gas compressor (10);

- the third pinion shaft (23) is equipped on one end with the bladed wheel of a high pressure stage (152) of the aforementioned residual gas radial expander (15) and at its other end with the bladed wheel (2) of the high pressure stage of the aforementioned air compressor (6);

- and at its one end, the fourth pinion shaft (24) is driven directly and at an identical rotational speed by the driven (take-off) side shaft end of a steam turbine (17) which converts process heat, and is unequipped at its other end.

**Revendications**

1. Procédé pour la fabrication d'acide nitreux selon le procédé à deux pressions dans lequel la combustion de l'ammoniac utilisé a lieu grâce à une première pression basse par une méthode où l'air de traitement est comprimé et dans lequel le gaz nitreux formé au cours de la combustion est au moins partiellement absorbé par de l'eau grâce à une deuxième pression comparativement plus élevée que la première, au moyen de quoi on obtient l'acide nitreux et on détend le gaz résiduaire non absorbé dans un détendeur de gaz résiduaire qui ramène la deuxième pression à la pression de l'environnement, dans un but de récupération de l'énergie de compression **caractérisé en ce que** un turbocompresseur à engrenages à plusieurs arbres est alimenté séparément en air de traitement et en gaz nitreux, l'air de traitement étant comprimé à ladite première pression et le gaz nitreux étant comprimé à ladite deuxième pression.

2. Procédé selon la revendication 1 **caractérisé en ce que** l'on utilise au moins partiellement l'énergie de compression produite par le détendeur de gaz résiduaire pour commander les étages de compression du gaz nitreux et/ou pour commander les étages de compression de l'air du turbocompresseur à engrenages à plusieurs arbres.

3. Procédé selon la revendication 1 ou 2 **caractérisé en ce que** l'énergie de compression produite à une ou plusieurs extrémités du côté de l'entraînement d'un détendeur de gaz résiduaire soit transmise immédiatement et avec la même vitesse de rotation à au moins un arbre de pignon de l'unique turbocompresseur à engrenages à plusieurs arbres.

4. Procédé selon l'une des revendications précédentes **caractérisé en ce que** la roue de grand diamètre de l'unique turbocompresseur à engrenages à plusieurs arbres est commandée soit par un moteur électrique, par un moteur Diesel ou par une turbine à gaz ou à vapeur.

5. Procédé selon l'une des revendications précédentes **caractérisé en ce que** l'on commande immédiatement et avec la même vitesse de rotation un arbre de pignon d'un unique turbocompresseur à engrenages à plusieurs arbres par une turbine à gaz ou à vapeur.

6. Procédé selon l'une des revendications précédentes **caractérisé en ce que** l'air comprimé provenant de l'étage basse pression du compresseur d'air sur le turbocompresseur à engrenages à plusieurs arbres est transféré immédiatement dans l'étage haute pression.

7. Procédé selon l'une des revendications précédentes **caractérisé en ce que** l'on transfère dans l'étage haute pression sans les refroidir les gaz nitreux comprimés provenant de l'étage basse pression du compresseur de gaz nitreux du turbocompresseur à engrenages à plusieurs arbres.

8. Installation pour la fabrication d'acide nitreux selon le procédé à deux pressions avec un brûleur de $NH_3$ (7) pour la combustion de l'ammoniac utilisé sous une première pression faible ainsi qu'un compresseur pour apporter l'air de traitement, une colonne adsorbante (13) destinée à l'adsorption partielle du gaz nitreux au moyen d'eau et le transport de l'acide nitreux avec un détendeur de gaz résiduaire destiné à produire l'énergie de compression et à détendre le gaz résiduaire à partir du deuxième niveau de pression à la pression atmosphérique **caractérisée en ce que** dans l'installation on prévoit un turbocompresseur à engrenages à plusieurs arbres (19) avec un compresseur destiné à la compression de l'air de traitement à la première pression et avec un compresseur de gaz nitreux destiné à la compression du gaz nitreux à une deuxième pression.

9. Installation selon la revendication 8
**caractérisée en ce que**
le seul turbocompresseur à engrenages à plusieurs arbres (19) est équipé de quatre arbres de pignon (21-24), le premier (21) et le troisième (23) arbre de pignon sont placés dans le plan médian horizontal qui est déterminé par l'axe de la roue de grand diamètre (25), le deuxième arbre de pignon (22) est placé centralement au-dessus de la roue de grand diamètre (25) et le quatrième arbre de pignon (25) centralement au-dessous de la roue de grand diamètre (fig. 2).

10. Installation selon la revendication 8 ou 9
**caractérisée en ce que**
au moins trois arbres de pignon peuvent présenter deux extrémités munies de roues à aubes de compresseurs ou de détendeurs.

11. Installation selon la revendication 8, 9 ou 10
**caractérisée en ce que**

- le premier arbre de pignon (21) comporte à l'une de ses extrémités la roue à aubes de l'étage basse pression (61) d'un compresseur d'air (6)
- et à son autre extrémité la roue à aubes de l'étage basse pression (151) d'un détendeur radial de gaz résiduaire (15) ;
- le deuxième arbre de pignon (22) comporte à l'une de ses extrémités la roue à aubes (111) de l'étage basse pression d'un compresseur de gaz nitreux (10)
- et à son autre extrémité la roue à aubes de l'étage haute pression (112) dudit compresseur de gaz nitreux (10) ;
- le troisième arbre de pignon (23) comporte à l'une de ses extrémités la roue à aubes d'un étage haute pression (152) dudit détendeur radial de gaz résiduaire (15) et à son autre extrémité la roue à aubes (2) de l'étage haute pression dudit compresseur d'air (6) ;
- et le quatrième arbre de pignon (24) à l'une de ses extrémités est commandé, immédiatement et avec la même vitesse de rotation, par l'extrémité de l'arbre (se trouvant du côté de l'entraînement) d'une turbine à vapeur (17) transformant une chaleur de traitement, et l'autre extrémité du quatrième arbre est libre.

Fig. 1

EP 0 945 400 B1

13

**Fig. 2**